# EUROPEAN PATENT SPECIFICATION

(11) **EP 0 649 824 B1**
(45) Date of publication and mention of the grant of the patent: **20.06.2001**
(21) Application number: 94307781.8
(22) Date of filing: 24.10.1994
(51) Int. Cl.: C04B 35/584

(54) **Silicon nitride-based sinters**
Auf Siliziumnitrid basierende Sinter
Agglomérés frittés à base de nitrure de silicium

(30) Priority: 25.10.1993 JP 26615493
(43) Date of publication of application: 26.04.1995
(73) Proprietor: KABUSHIKI KAISHA TOSHIBA, Kawasaki-shi, Kanagawa-ken 210-8572 (JP)
(72) Inventor: Ikeda, Isao, c/o Int. P. Div. of K.K. Toshiba, Tokyo (JP); Komatsu, Michiyasu, c/o Int. P Div. of K K Toshiba, Tokyo (JP)
(74) Representative: BATCHELLOR, KIRK & CO.

(56) References cited:
- US-A- 5 187 127
- CHEMICAL ABSTRACTS, vol. 112, no. 10, 5 March 1990 Columbus, Ohio, US; abstract no. 82900m, page 350; & JP-A-01 208 370 (DENKI KAGAKU K.K.)
- JOURNAL OF THE CERAMIC SOCIETY OF JAPAN, INTERNATIONAL EDITION , vol. 100, no. 7, July 1992 TOKYO, JP, pages 925-929, XP 000328679 W.-S. CHO ET AL.

## Description

This invention relates to silicon nitride-based sinters which provide good resistance to chemicals, and a method for the production thereof as indicated in the appended claims 1-11.

Ceramic sinters having silicon nitride as a main component thereof possess various desirable properties such as very high heat resistance, a small thermal expansion coefficient, and excellent resistance to thermal shock. There are attempts to use these ceramic sinters in engine parts, machine parts made of steel and the like as high-temperature structural materials to replace conventional heat-resistant alloys. Further, since they can have excellent frictional resistance, efforts continue to make use of these ceramic sinters in sliding members and cutting tools.

Generally, silicon nitride is a ceramic material of rather poor sintering properties. Silicon nitride powder prepared as a raw material for sintering can have improved sintering properties by including a sintering auxiliary, such as a rare earth element oxide or aluminium oxide, in a prescribed amount to permit production of a ceramic sinter with both high density and high strength. By way of known examples of sintering composition (i.e. their raw material composition) for silicon nitride-based ceramics, there are Si₃N₄-Y₂O₃ type compositions, Si₃N₄-Y₂O₃-Al₂O₃-AlN type compositions, and Si₃N₄-Y₂O₃-Al₂O₃ oxide of Ti,Mg or Zr type compositions.

In the sintering compositions mentioned above, yttrium oxide and other similar rare earth element oxides and aluminium oxide improve silicon nitride sintering properties and enhance densification of silicon nitride sinters. Silicon nitride-based sinters manufactured from raw materials incorporating a rare earth element oxide or aluminium oxide can have a dense texture with attractive mechanical strength properties. Measures have been adopted to improve mechanical properties and frictional resistance of silicon nitride sinters at elevated temperatures, by incorporating a combination of a plurality of kinds of compounds such as aluminium nitride and titanium oxide with the raw material powder.

Silicon nitride-based sinters which have such sintering compositions as mentioned above, however, are almost universally deficient in resistance to corrosion caused by such chemicals as acids and alkalis. When used as structural materials in an environment exposed or subjected to such chemicals there is a problem concerning the expected durability and/or reliability of the sinters. Particularly, the rare earth oxides are at a disadvantage in more readily yielding to corrosion by such chemicals as acids or alkalis. Consequently, this can induce serious degradation of the strength of silicon nitride-based sinters, even though there can be desirable effects in rendering the silicon nitride more dense.

Silicon nitride-based sinters are known which do not incorporate rare earth element oxide. For example, sinters using 0.5 to 5 parts by weight of spinel and 0.5 to 5 parts by weight of titanium carbonate as sintering auxiliaries are disclosed in : JP-B2; 63-23,153. Silicon nitride-based sinters obtained by using a mixture of silicon oxide with silicon carbide not as a sintering auxiliary but as a starting raw material which is subjected to reactive sintering in an atmosphere of nitrogen gas is disclosed in : JP-A-59-152,270. Although these silicon nitride-based sinters can show high strength at elevated temperatures, they are not intended to show any improvement in resistance to chemicals (resistance to corrosion) and in practice their resistance to chemicals is inadequate. Moreover, composite sinters of silicon nitride and silicon carbide are known, see JP-A-63-159,256. Since manufacture of these composite sinters requires yttrium oxide and other rare earth element oxides as sintering auxiliaries, the composite sinters cannot provide and would not be expected to confer sufficient resistance to chemicals, especially corrosion resistance against acids and alkali.

Sinters made of β-Sialon as the raw material are widely used as materials which can have relatively good resistance to chemicals. Since they are deficient in mechanical properties, they have the disadvantage of but a limited range of utility.

Recently demand has increased for heat resisting members and abrasion resisting members which can have a useful life and strength when subjected to an atmosphere or other environment wherein potentially corrosive chemical substances are present. For uses of this nature, corrosion proof heat-resistant alloys and heat-resistant hard metals which were previously used are not easily adapted. Thus, more widespread use of ceramic sinters which can better metals in resistance to heat and abrasion, as well as offering enhanced resistance to chemicals (particularly against corrosion) has been sought.

An object of this invention, therefore, is to provide silicon nitride-based sinters which have significantly improved resistance to corrosion caused by such chemicals as acids and alkalis but which mitigates or even avoids impairing one or preferably more than one of the inherent silicon nitride characteristics, i.e. strength, resistance to abrasion, and resistance to heath; and a method for the production thereof.

The present inventors have investigated auxiliaries suitable for addition to the raw material for sintering as to type and quantity thereof. As a result, they have surprisingly found that silicon nitride sinters with significantly improved resistance to chemicals and yet which may suffer only sparingly from reduced strength, is obtained by having at least an MgO.Al₂O₃ structure and silicon carbide incorporated as auxiliaries in suitable amounts in the silicon nitride raw material for sintering.

This invention has been based on these unexpected findings. Silicon nitride-based sinters according to this invention are characterized by containing as component elements thereof 0.1 to 1.5 % by weight of magnesium, 0.1 to 3.5 % by weight of aluminium, 0.01 to 6 % by weight of carbon and 0.2 to 5 % by weight of oxygen and wherein the balance is composed substantially of silicon; nitrogen, and impurities. Moreover, the silicon nitride-based sinter mentioned above can be characterized by additionally containing as a component element 0.1 to 3.8 % by weight of at least one of : titanium, hafnium, and tungsten.

Silicon nitride-based sinters, based on starting material, may be produced by sintering a ceramic mixture comprising 0.5 to 6 % by weight of a MgO.Al₂O₃ spinel structure, 0.1 to 20% by weight of silicon carbide, not more than 1% by weight of silicon oxide, and the balance substantially of silicon nitride and impurities. The method of making such sinters may also be characterized by sintering a ceramic mixture further comprising 0.1 to 4% by weight of at least one oxide and/or carbide of titanium, hafnium, and/or tungsten.

Without wishing to be bound by any theoretical considerations, it is postulated that during manufacture of the present silicon nitride-based sinters the MgO.Al₂O₃ spinel structure which is most preferably added to the silicon nitride raw material may not only function as an agent for promoting sintering but may also form a grain boundary phase with the property of strong resistance particularly to chemicals and consequently imparting improved resistance to chemicals to the final sinter product. Thus, said spinel structure is incorporated in an amount of 0.5 to 6 % by weight in the powdered raw material (ceramic mixture). If the amount added is less than 0.5 % by weight, the produced sinter may be deficient in textural densification and the characteristics inherent in silicon nitride might be impaired. Conversely, if the amount of said spinel structure exceeds 6 % by weight, resistance by the sinter to chemicals may actually decrease, in proportion to the excess. Preferably, the amount of the MgO.Al₂O₃ spinel structure added is 2 to 5 % by weight. In addition to the MgO.Al₂O₃ spinel structure which can be and most preferably is intentionally added as an agent for promoting sintering, the MgO.Al₂O₃ spinel structure can be formed in the sinter at least after the step of sintering. Adding MgO.Al₂O₃ spinel is preferable to adding MgO and Al₂O₃ independently during production of the sinter not only to impart good resistance against chemicals, but also to promote densification of silicon nitride by lowering the melting point of the sinter. By adding MgO and Al₂O₃ in the form of MgO.Al₂O₃ spinel instead of adding MgO and Al₂O₃ independently preferably during production of the sinter, compaction of the silicon nitride can be significantly better. It has been surprisingly found that MgO.Al₂O₃ spinel not only imparts improved resistance to chemicals but it can also lower the melting point of the sinter.

Silicon carbide, which can be added as an optional but preferred component to the silicon nitride raw material not only further improves resistance to chemicals but can also improve mechanical properties, particularly hardness, of the silicon nitride-based ceramic and can further provide high rigidity to the sinter. The addition of silicon carbide may also alleviate resistance to friction under conditions devoid of lubricant such as within the mass of a chemical compound. It can be incorporated in the powdered raw material in an amount of 0.1 to 20 % by weight. If the amount of silicon carbide added is less than 0.1 % by weight, there may not be sufficient improvement in mechanical properties and/or in alleviating resistance to friction. Conversely, if the amount of any added silicon carbide exceeds 20 % by weight, there could be deterioration of sintering properties in the raw material. Preferably, the amount of any added silicon carbide is 1 to 10 % by weight.

Silicon nitride sinters of this invention can, through use of MgO.Al₂O₃ spinel structure, and silicon carbide as a sintering auxiliary for the silicon nitride, provide unexpectedly better mechanical strength, resistance to abrasion as well as resistance to corrosion by chemicals.

The ability of the present sintered ceramics to resist chemicals can be further improved by adding silicon oxide to the silicon nitride raw material. Again, without wishing to be bound by any theoretical considerations, it is possible silicon oxide not only resists chemicals in its own right, but may also strengthen the union between silicon nitride particles and other auxiliaries, enabling the final sintered ceramic product to show still better and possibly synergistically improved resistance to chemicals. Although silicon oxide is optional and not always required, it is desired for the reasons just explained. When silicon oxide is added, the amount is preferably not more than 1 % by weight. If the amount of silicon oxide to be added exceeds 1 % by weight, the excess of the compound may impair sintering properties of the raw material. The amount of silicon oxide when added is more preferably 0.2 to 1 % by weight, most preferably 0.2 to 0.6 % by weight.

Besides the auxiliary additives mentioned above, the ceramic mixture to be used in this invention may incorporate at least one compound selected from among the oxides and carbides of Ti, Hf, and W in an amount of 0.1 to 4 % by weight. These compounds of Ti, Hf, and W appear to act synergistically with the MgO.Al₂O₃ spinel structure and appear to function as a sinter promoting agent for promoting textural densification. After the sintering, they are apparently dispersed in the form of independent particles of high melting compounds within the texture of the sinter and help to improve strength and abrasion resistance of the sintered ceramic product. The compound(s) of Ti, Hf, and W if used are preferably included in an amount of 0.1 to 4 % by weight in the powdered raw material. If the amount so added is less than 0.1 % by weight, the added compound(s) may not effectively promote sintering properties of the raw material nor the strength of the sintered ceramic product. Conversely, if the amount of such added compound(s) exceeds 4 % by weight, the sinter produced may be deficient in its ability to resist chemicals. To enable the sinter produced to retain adequate mechanical strength with good resistance to chemicals, it is more desirable that said compound(s) be added in an amount of 1 to 2 % by weight.

The contents of the component elements of the silicon nitride-based sinter of this invention are further explained. If the content of Mg is less than 0.1 % by weight or the content of Al is less than 0.1 % by weight, for example, the sinter produced may not have sufficiently good resistance to chemicals and can suffer from a decrease in textural density. Conversely, if the amount of Mg exceeds 1.5 % by weight or the amount of Al exceeds 3.5 % by weight, the sinter produced could be deficient in chemical resistance. Although Mg and Al are generally present in such a ratio as to form a MgO.Al₂O₃ spinel structure, slight deviation of this ratio during the course of sintering can be tolerated and is embraced by this invention. The content of oxygen is defined for substantially the same reason as the content of Mg and Al mentioned above and is 0.2 to 5 % by weight. Carbon (C) can be added in the form of silicon carbide. If the content of C is less than 0.01 % by weight, the sinter produced may not have sufficiently good mechanical properties or chemical resistance. Conversely, if the amount of C exceeds 6 % by weight, there could be an undesirable decrease in the textural density of the final sintered ceramic product. Similar reasons pertain in respect of the amounts of the optional compound(s) of Ti, Hf, and W.

The silicon nitride-based sinters of this invention can be manufactured for example by a general method of production as follows:

### General Method

A raw material mixture (ceramic mixture) is prepared by adding MgO.Al₂O₃ spinel structure, silicon carbide, and silicon oxide and, when necessary, further adding at least one compound selected from among the oxides and carbides of Ti, Hf, and W in prescribed amounts to the silicon nitride raw material. Then, the raw material mixture is moulded in a desired shape (to form a moulded ceramic mass) by the well-known method using a metallic press, for example. This moulded mass is sintered in an atmosphere of an inert gas such as nitrogen gas or argon gas at a temperature approximately in the range 1700°C to 1800°C for a prescribed time.

This sintering operation may be implemented by the normal pressure sintering method or by any of the other sintering methods such as, for example, the hot press method, the ambient pressure method, and the hot hydrostatic press (HIP) method. Virtually irrespective of the type of sintering method used, the silicon nitride-based sinter subsequently obtained can have high textural density and mechanical strength together with unexpectedly good ability to resist corrosion (i.e. resistance to chemicals) within working environments which contain or are otherwise subject to the presence of such corrosive chemicals as acids or alkalis.

In order that the invention may be more easily appreciated and readily carried into effect by one skilled in the art, embodiments thereof will now be described purely by way of non-limiting examples.

### Example 1:

A mixture consisting of 92 % by weight of an α-phase type silicon nitride powder having an average particle diameter of 0.7 *µ*m, 4 % by weight of a MgO.Al₂O₃ spinel structure powder having an average particle diameter of 0.8 *µ*m, 3.4 % by weight of a silicon carbide powder having an average particle diameter of 0.5 *µ*m, and 0.6 % by weight of a silicon oxide powder having an average particle diameter of 0.7 *µ*m was mixed in ethanol as a liquid medium in a ball mill for 48 hours to produce a homogeneous raw material mixture (ceramic mixture).

Then, the raw material mixture thus obtained and a prescribed amount of an organic binder added thereto were uniformly mixed and compression moulded with a moulding pressure of 1000 kgf/cm² to produce a moulded piece measuring 50 mm x 50 mm x 5 mm. Subsequently, the moulded piece was degreased in an atmosphere of nitrogen gas at a temperature of 500°C. The degreased piece was subjected to normal pressure sintering in an atmosphere of nitrogen gas at 1800°C for two hours to obtain a silicon nitride-based sinter. The component elements contained in this silicon nitride-based sinter were 0.7 % by weight of Mg, 1.5 % by weight of Al, 2.5 % by weight of O, 1.0 % by weight of C, 57.5 % by weight of Si, 36.8 % by weight of N, and 0.01 % by weight of impurities (such as Fe).

Separately, for comparison with this invention, a silicon nitride-based sinter (Comparative Example 1) was obtained by repeating the same operations of mixing, moulding, degreasing, and sintering as involved in the procedure of Example 1 described above while using 2% by weight of a yttrium oxide powder having an average particle diameter of 0.9 µm and 2% by weight of an aluminium oxide powder having an average particle diameter of 0.9 µm in place of the MgO·Al₂O₃ spinel structure powder.

The silicon nitride-based sinters obtained respectively in Example 1 and Comparative Example 1 as described above were tested for density, bending strength at normal room temperature, and disruptive strength. In order to evaluate the ability to resist chemicals, the samples were immersed in an aqueous 30% HCl solution, heat-treated therein at 90°C for 100 hours, and thereafter tested for loss of weight and bending strength. The results are shown in Table 1.

**Table 1**

| | Relative density (%) | Bending strength (kgf/mm²) | Disruptive strength (MPa m^{1/2}) | Loss of weight after immersion in HCl (%) | Bending strength after immersion in HCl (kgf/mm²) |
|---|---|---|---|---|---|
| Ex 1 | 99.8 | 103 | 6.8 | 0.009 | 94 |
| CE 1 | 99.8 | 100 | 6.6 | 0.105 | 60 |
| Note) Ex = Example CE = Comparative Example | | | | | |

It is clearly noted from the results of the test given in Table 1 that the silicon nitride-based sinter of Example 1 had good mechanical properties such as bending strength and disruptive strength and, in respect of properties after immersion in the aqueous HC1 solution, this sinter showed a smaller loss of weight and better mechanical properties than the sinter of Comparative Example 1 which incorporated yttrium oxide.

### Examples 2 to 15 and Comparative Examples 2 to 5:

Raw material mixtures were prepared by mixing the same silicon nitride powder, MgO•Al₂O₃ spinel structure powder, silicon carbide powder, silicon oxide powder, and oxide or carbide powders of Ti, Hf, and W as used in Example 1 in amounts to form the composition ratios shown in Table 2. Then, the raw material mixtures thus obtained were subjected to the same operations of moulding degreasing, and sintering as involved in the procedure of Example 1 to produce silicon nitride-based sinters.

In Comparative Experiments 2 to 5, raw material mixtures containing silicon carbide, a MgO•Al₂O₃ spinel structure, silicon oxide, and titanium oxide respectively in excess amounts were prepared and subjected to the same operations of mixing through sintering as involved in the procedure of Example 1 to produce silicon nitride-based sinters.

**Table 2**

| | Raw material composition (% by weight) | | | |
|---|---|---|---|---|
| | Si₃N₄ | Spinel | SiC | Other components |
| Ex 2 | 91.5 | 4 | 5 | SiO₂ : 0.5 |
| Ex 3 | 79.5 | 5 | 15 | SiO₂ : 0.5 |
| Ex 4 | 95.0 | 3 | 1.5 | SiO₂ : 0.5 |
| Ex 5 | 91.2 | 3 | 5 | SiO₂ : 0.8 |
| Ex 6 | 92.8 | 3 | 4 | SiO₂ : 0.2 |
| Ex 7 | 92.2 | 4 | 4 | - |
| Ex 8 | 82.0 | 6 | 12 | - |
| Ex 9 | 95.0 | 1.5 | 3 | SiO₂ : 0.5 |
| Ex 10 | 90.6 | 3 | 5 | SiO₂ : 0.4, TiO₂ : 1 |
| Ex 11 | 88.2 | 3 | 5 | SiO₂ : 0.3, TiO₂ : 3.5 |
| Ex 12 | 93.8 | 3 | 3 | TiO₂ : 0.2 |
| Ex 13 | 91.0 | 4 | 3 | SiO₂ : 0.5, TiC : 1.5 |
| Ex 14 | 89.0 | 4 | 5 | SiO₂ : 0.5, WC : 1.5 |
| Ex 15 | 90.0 | 4 | 4 | SiO₂ : 0.5, HfO₂ : 1.5 |
| CE 2 | 64.5 | 5 | 30 | SiO₂ : 0.5 |
| CE 3 | 84.5 | 10 | 5 | SiO₂ : 0.5 |
| CE 4 | 90.0 | 3 | 5 | SiO₂ : 2.0 |
| CE 5 | 83.5 | 3 | 5 | SiO₂ : 0.5, TiO₂ : 8 |
| Note) Ex = Example CE = Comparative Example | | | | |

The silicon nitride-based sinters obtained in Examples 2 to 15 and Comparative Examples 2 to 5 as described above were tested for density, bending strength, and hardness in the same manner as in Example 1 and, at the same time, subjected to an immersion treatment in the aqueous HCl solution and, after the treatment, tested for weight loss and bending strength. The results are shown in Table 3.

**Table 3**

| | Relative density (%) | Bending strength (kgf/mm²) | Disruptive strength (MPa m^{1/2}) | hardness | Loss of weight after immersion in HCl (%) | Bending strength after immersion in HCl (kgf/mm²) |
|---|---|---|---|---|---|---|
| Ex 2 | 99.8 | 110 | 6.9 | 1520 | 0.006 | 100 |
| Ex 3 | 99.7 | 100 | 6.8 | 1560 | 0.009 | 92 |
| Ex 4 | 99.8 | 108 | 6.8 | 1500 | 0.005 | 97 |
| Ex 5 | 99.7 | 105 | 6.7 | 1490 | 0.005 | 96 |
| Ex 6 | 99.8 | 110 | 6.8 | 1500 | 0.010 | 94 |
| Ex 7 | 99.8 | 109 | 7.0 | 1510 | 0.013 | 94 |
| Ex 8 | 99.8 | 115 | 6.9 | 1550 | 0.016 | 92 |
| Ex 9 | 99.6 | 103 | 6.7 | 1500 | 0.004 | 92 |
| Ex 10 | 99.8 | 117 | 6.9 | 1520 | 0.007 | 99 |
| Ex 11 | 99.7 | 125 | 7.0 | 1500 | 0.020 | 97 |
| Ex 12 | 99.8 | 108 | 7.0 | 1490 | 0.017 | 93 |
| Ex 13 | 99.7 | 112 | 7.1 | 1520 | 0.008 | 95 |
| Ex 14 | 99.8 | 115 | 7.1 | 1550 | 0.006 | 100 |
| Ex 15 | 99.8 | 110 | 7.2 | 1500 | 0.006 | 97 |
| CE 2 | 95.5 | 82 | 6.2 | 1620 | 0.019 | 71 |
| CE 3 | 99.8 | 115 | 7.1 | 1490 | 0.042 | 76 |
| CE 4 | 97.0 | 88 | 6.4 | 1430 | 0.020 | 79 |
| CE 5 | 99.8 | 110 | 7.0 | 1510 | 0.045 | 72 |
| Note) Ex = Example CE = Comparative Example | | | | | | |

The test results shown in Table 3 clearly indicate that the sinters of Examples 2 to 15 incorporating the spinel structure and silicon carbide and optionally further incorporating oxides or carbides of Ti, Hf, and W in prescribed amounts invariably exhibit high mechanical properties and excel in resistance to chemicals.

It is clearly noted from the working examples that silicon nitride-based sinters of this invention have enhanced resistance to corrosion by various chemicals whilst simultaneously conferring improved mechanical properties but without significant impairment to the typical abrasion resistance of silicon nitride sintered ceramic products. It is believed that the spinel structure may form a grain boundary phase in the texture of the sinter which confers the surprisingly good resistance to chemicals. Thus, this invention can provide silicon nitride-based sinters useful as high-strength, abrasion-resistant and chemical-resistant ceramic products.- Such products have the potential capacity to replace conventional corrosion-resistant heat-resistant alloys and heat-resistant hard metals which have been conventionally used for forming e.g. gas turbine parts and other components used in high temperature and/or high stress applications.

## Claims

1. A silicon nitride-based sinter having an improved resistance to chemical corrosion, is characterised in that said sinter comprises MgO.Al₂O₃ spinel structure, silicon carbide, silicon oxide, and the balance substantially of silicon nitride and impurities, and said sinter is produced by sintering a ceramic mixture consisting of 0.5 to 6.0 % by weight of MgO.Al₂O₃ spinel structure, 0.1 to 20% by weight of silicon carbide, not more than to by weight of silicon oxide, and the balance substantially of silicon nitride and impurities.

2. A silicon nitride-based sinter according to claim 1, wherein said ceramic mixture contains 0.1 to 4 % by weight of at least one of the following compounds: oxides and/or carbides of titanium, hafnium, and/or tungsten.

3. A method of making a silicon nitride-based sinter comprising moulding in a desired shape a ceramic mixture containing 0.5 to 6.0 % by weight of MgO.Al₂O₃ spinel structure, 0.1 to 20 % by weight of silicon carbide, not more than 1 % by weight of silicon oxide, and the balance substantially of silicon nitride and impurities, and sintering the moulded ceramic mixture obtained in an inert gas atmosphere.

4. A method according to claim 3, wherein said ceramic mixture contains 0.1 to 4 % by weight of at least one of the following compounds: oxides and/or carbides of titanium, hafnium, and/or tungsten.

5. A silicon nitride-based powdered ceramic mixture capable of forming a silicon-nitride based sinter, wherein said powdered ceramic mixture comprises 0.5 to 6.0 % by weight of MgO.Al₂O₃ spinel structure powder, 0.1 to 20 % by weight of silicon carbide powder, not more than 1.0 % of silicon oxide powder and the balance substantially of silicon nitride powder and impurities.

6. A powdered ceramic mixture as claimed in claim 5 containing 0.2 to 1 % by weight of silicon oxide powder.

7. A powdered ceramic mixture as claimed in claim 5 or 6, comprising 2.0 to 5.0 % by weight of MgO.Al₂O₃ spinel structure powder.

8. A powdered ceramic mixture as claimed in any one of claims 5 to 7, comprising 1.0 to 10.0 % by weight of silicon carbide powder.

9. A powdered ceramic mixture as claimed in any one of claims 5 to 8, comprising 0.2 to 0.6 % by weight of silicon oxide powder.

10. A powdered ceramic mixture as claimed in any one of claims 5 to 9, which further contains 0.1 to 4 % by weight of at least one of the following compounds: oxides and/or carbides of titanium, hafnium, and/or tungsten.

11. A powdered ceramic mixture as claimed in claim 10, containing 1.0 to 2.0 % by weight of said oxides and/or carbides.

## Patentansprüche

1. Sinter auf Siliziumnitridbasis mit einer verbesserten Beständigkeit gegen chemische Korrosion, dadurch gekennzeichnet, daß der Sinter die Spinellstruktur MgO.Al₂O₃, Siliziumcarbid, Siliziumoxid und den Rest an im wesentlichen Siliziumnitrid und Verunreinigungen umfaßt und der Sinter durch Sintern einer Keramikmischung erzeugt wird, die aus 0,5 bis 6,0 Gewichts% der Spinellstruktur MgO.Al₂O₃, 0,1 bis 20 Gewichts% Siliziumcarbid, nicht mehr als 1 Gewichts% Siliziumoxid und dem Rest an im wesentlichen Siliziumnitrid und Verunreinigungen besteht.

2. Sinter auf Siliziumnitridbasis entsprechend Anspruch 1, wobei die Keramikmischung 0,1 bis 4 Gewichts% von zumindest einem der folgenden Verbindungen enthält: Oxide und/oder Carbide von Titan, Hafnium und/oder Wolfram.

3. Verfahren zur Herstellung eines Sinters auf Siliziumnitridbasis, das das Formen einer Keramikmischung in einer gewünschten Gestalt umfaßt, die 0,5 bis 6,0 Gewichts% der Spinellstruktur MgO.Al₂O₃, 0,1 bis 20 Gewichts% Siliziumcarbid, nicht mehr als 1 Gewichts% Siliziumoxid und den Rest an im wesentlichen Siliziumnitrid und Verunreinigungen enthält, und Sintern der geformten Keramikmischung, die in Inertgasatmosphäre erhalten wird.

4. Verfahren entsprechend Anspruch 3, wobei die Keramikmischung 0,1 bis 4 Gewichts% zumindest eines der folgenden Verbindungen enthält: Oxide und/oder Carbide von Titan, Hafnium und/oder Wolfram.

5. Gepulverte Keramikmischung auf Siliziumnitridbasis, die zur Bildung eines Sinters auf Siliziumnitridbasis fähig ist, wobei die gepulverte Keramikmischung 0,5 bis 6,0 Gewichts% an MgO.Al₂O₃ Pulver mit Spinellstruktur, 0,1 bis 20 Gewichts% Siliziumcarbidpulver, nicht mehr als 1,0 % Siliziumoxidpulver und den Rest an im wesentlichen Siliziumnitrid und Verunreinigungen umfaßt.

6. Gepulverte Keramikmischung, wie in Anspruch 5 beansprucht wird, die 0,2 bis 1 Gewichts% Siliziumoxidpulver enthält.

7. Gepulverte Keramikmischung, wie in Anspruch 5 oder 6 beansprucht wird, die 2,0 bis 5,0 Gewichts% MgO.Al₂O₃ Pulver mit Spinellstruktur umfaßt.

8. Gepulverte Keramikmischung, wie in einem der Ansprüche 5 bis 7 beansprucht wird, die 1,0 bis 10,0 Gewichts% Siliziumcarbidpulver umfaßt.

9. Gepulverte Keramikmischung, wie in einem der Ansprüche 5 bis 8 beansprucht wird, die 0,2 bis 0,6 Gewichts% Siliziumoxidpulver umfaßt.

10. Gepulverte Keramikmischung, wie in einem der Ansprüche 5 bis 9 beansprucht wird, die des weiteren 0,1 bis 4 Gewichts% zumindest einer der folgenden Verbindungen enthält: Oxide und/oder Carbide von Titan, Hafnium und/oder Wolfram.

11. Gepulverte Keramikmischung, wie in Anspruch 10 beansprucht wird, die 1,0 bis 2,0 Gewichts% der Oxide und/oder Carbide enthält.

## Revendications

1. Corps fritté à base de nitrure de silicium ayant une résistance améliorée à la corrosion chimique, caractérisé en ce que ledit corps fritté comprend une structure de spinelle de formule MgO.Al₂O₃, du carbure de silicium, de l'oxyde de silicium, le reste étant essentiellement du nitrure de silicium et des impuretés, et ledit corps fritté est produit en frittant un mélange céramique comprenant 0,5 à 6,0 % en poids d'une structure de spinelle de formule MgO.Al₂O₃, 0,1 à 20 % en poids de carbure de silicium, pas plus de 1 % en poids d'oxyde de silicium, le reste étant essentiellement du nitrure de silicium et des impuretés.

2. Corps fritté à base de nitrure de silicium selon la revendication 1, dans lequel ledit mélange céramique contient 0,1 à 4 % en poids d'au moins un des composés suivants : oxydes et/ou carbures de titane, d'hafnium, et/ou de tungstène.

3. Procédé de fabrication d'un corps fritté à base de nitrure de silicium comprenant les étapes consistant à mouler selon une forme souhaitée un mélange céramique contenant 0,5 à 6,0 % en poids d'une structure de spinelle de formule MgO.Al₂O₃, 0,1 à 20 % en poids de carbure de silicium, pas plus de 1 % en poids d'oxyde de silicium, le reste étant essentiellement du nitrure de silicium et des impuretés, et à fritter le mélange céramique moulé obtenu dans une atmosphère de gaz inerte.

4. Procédé selon la revendication 3, dans lequel ledit mélange céramique contient 0,1 à 4 % en poids d'au moins un des composés suivants : oxydes et/ou carbures de titane, d'hafnium, et/ou de tungstène.

5. Mélange céramique en poudre à base de nitrure de silicium apte à former un corps fritté à base de nitrure de silicium, dans lequel ledit mélange céramique en poudre comprend 0,5 à 6,0 % en poids d'une structure de spinelle en poudre de formule MgO.Al₂O₃, 0,1 à 20 % en poids de carbure de silicium en poudre, pas plus de 1,0 % en poids d'oxyde de silicium en poudre, le reste étant essentiellement du nitrure de silicium et des impuretés.

6. Mélange céramique en poudre selon la revendication 5 contenant 0,2 à 1 % en poids d'oxyde de silicium en poudre.

7. Mélange céramique en poudre selon la revendication 5 ou 6, comprenant 2,0 à 5,0 % en poids d'une structure de spinelle en poudre de formule MgO.Al₂O₃.

8. Mélange céramique en poudre selon l'une quelconque des revendications 5 à 7, comprenant 1,0 à 10,0 % en poids de carbure de silicium en poudre.

9. Mélange céramique en poudre selon l'une quelconque des revendications 5 à 8, comprenant 0,2 à 0,6 % en poids d'oxyde de silicium en poudre.

10. Mélange céramique en poudre selon l'une quelconque des revendications 5 à 9, qui contient, en outre, 0,1 à 4 % en poids d'au moins un des composés suivants : oxydes et/ou carbures de titane, d'hafnium, et/ou de tungstène.

11. Mélange céramique en poudre selon la revendication 10, contenant 1,0 à 2,0 % en poids desdits oxydes et/ou carbures.
